# EUROPEAN PATENT SPECIFICATION

(11) **EP 3 307 816 B1**
(45) Date of publication and mention of the grant of the patent: **26.02.2025**
(21) Application number: 15734081.1
(22) Date of filing: 15.06.2015
(51) Int. Cl.: C08K 3/34, C08K 3/36, C08K 5/5435, C08K 5/544, C09J 171/00, C08L 71/00

(54) **HIGH STRENGTH AND MOISTURE RESISTANT ADHESIVE**
HOCHFESTER UND FEUCHTIGKEITSBESTÄNDIGER KLEBSTOFF
ADHÉSIF À HAUTE RÉSISTANCE ET RÉSISTANT À L'HUMIDITÉ

(43) Date of publication of application: 18.04.2018
(73) Proprietor: Bison International B.v., 4462 EW Goes (NL)
(72) Inventor: KLERKS, Johannes Patricius Maria, 4443 AA Nisse (NL); CORNU, Shirley, 4337 PD Middelburg (NL)
(74) Representative: van Kooij, Adriaan
(86) International application number: PCT/EP2015/063363
(87) International publication number: WO 2016/202359

(56) References cited:
- WO-A1-2008/145458
- US-A1- 2012 108 730

## Description

The present invention relates to the field of adhesives and especially to the field of moisture curing, or hardening, adhesives. The present adhesives provide high strength, i.e. at least more than 4 N/mm², adhesion of materials such as wood, concrete, plastics, stone etc. while having a high moisture resistance.

An adhesive is a substance applied to the surface of materials for binding them together and resisting separation. The term "adhesive" may be used interchangeably with glue, cement, mucilage, or paste. The use of adhesives offers many advantages over other binding techniques such as sewing, mechanical fastening, thermal bonding, etc. These advantages include the ability to bind different materials together and to distribute stress more efficiently across a joint.

Moisture curing adhesives cure on exposure to moisture present in the substrate, atmosphere or environment. The curing reaction generally takes place from 5° to 50°C at a relative humidity of 40 to 100%. Under low humidity conditions or where the substrates are impermeable to moisture, moisture can be added during the assembly process to facilitate curing.

Moisture curing polyurethanes are formulated to cure with ambient water and are synthesized from isocyanates, such as aromatic diisocyantes, toluene diisocyanate (TDI) or methylene diphenyl diisocyanate (MDI) and polyols, such as polyether polyols or polyester polyols. Although moisture curing polyurethanes have been and are used in adhesive and coating industries, a major drawback of these adhesives is the inherent use and presence of highly toxic isocyanates. Amongst others considering the high toxicity of isocyanates, there is a continuous need in the art for alternative for moisture curing polyurethane based adhesives.

WO 2008/145458 discloses a floor adhesive comprising a polyether modified with silane groups, more particularly a polyether terminated or end-capped with reactive silane groups.

US 2012/108730 discloses a solvent-free and anhydrous hardenable composition that contains at least one polymer A obtainable by reacting a polyether with at least one ethylenically unsaturated silane in the presence of a radical starter, the ethylenically unsaturated silane carrying at least one hydrolyzable group on the silicon atom. The composition provides low viscosity prior to curing along with good elasticity after curing and a broad adhesion spectrum in a solvent-free and water-free hardenable composition.

It is an object of the present invention, amongst other objects, to provide alternatives for polyurethane based adhesives.

The above object, amongst other objects, is met by the present invention through providing a high strength and moisture curing adhesives as outlined in the appended claims.

Specifically, the above object, amongst other objects, is, according to a first aspect, met by the present invention by providing high strength and moisture-curing adhesives comprised of:
a) 25 to 75 % (wt) of one or more silane modified polyethers;
b) 10 to 60% (wt) of one or more filler material;
c) 0.3 to15% (wt) of one or more adhesion promotors wherein one or more adhesion promotors are a combination of an epoxy functionalized alkoxy silane, amino functionalized alkoxy silane and an amino functionalized siloxane;
wherein the present adhesive further comprises one or more compounds selected from the group consisting of a radical scavenger, a moisture scavenger, an anti-oxidant, a rheological modifier, and a catalyst, and
wherein the one or more filler material is Neuburg Siliceous earth.

Neuburg siliceous Earth is a natural combination of corpuscular, cryptocrystalline and amorphous silica and lamellar kaolinite and is available from Hoffmann Mineral GmbH (Neuburg, Germany). A preferred Neuburg Siliceous Earth according to the present invention is Sillitin V85 available from Hoffmann Mineral GmbH (Neuburg, Germany).

According to an especially preferred embodiment of this first aspect, the present invention relates to strength and moisture-curing adhesives comprised of:
a) 25 to 75 % (wt) of one or more silane modified polyethers;
b) 10 to 60% (wt) of one or more siliceous filler materials;
c) 0.3 to 5.0% (wt) of one or more epoxy functionalized alkoxy silanes;
d) 0.3 to 5.0% (wt) of one or more amino functionalized alkoxy silanes;
e) 0.3 to 5.0 % (wt) or one or more amino functionalized siloxanes;
f) a radical scavenger, preferably 0.1 to 0.5% (wt);
g) a moisture scavenger, preferably 0.5 to 5% (wt);
h) an anti-oxidant, preferably 0.1 to 1% (wt);
i) a rheological modifier, preferably 0.2 to 5.0% (wt); and
j) a catalyst, preferably 0.05 to 5% (wt).

Within the context of the present invention weight percentage or % (wt) is defined as the weight of the indicated compound, or composition, as a percentage of the total weight of the present high strength and moisture curing adhesive.

Within the context of the present invention, high strength is defined as:
1) having a strength of more than ≥10 N/mm² after 7 days in a standard atmosphere;
2) having a strength of more than ≥4 N/mm² after 7 days in a standard atmosphere and 4 days in water at 20 ± 5 °C;
3) having a strength of more than ≥4 N/mm² after 7 days in a standard atmosphere 6 hours in boiling water and 2 hours in water at 20 ± 5 °C;
   wherein the present strength is determined in accordance with EN 204: Classification of thermoplastic wood adhesives for non-structural applications and EN205: Wood adhesives for non-structural applications or determination of tensile shear strength of lap joints.
4) having a strength of more than ≥ 5.5 N/mm² after 7 days in standard atmosphere 1 hour in a preheated fan oven, at 80 ± 2,0 °C for 60 ± 2 min wherein the present strength is determined in accordance with EN 14257: Determination of tensile strength of lap joints at elevated temperature (WATT 91)

According to a preferred embodiment of this first aspect of the present invention, the present silane modified polyether has a dynamic viscosity in the range of 250 to 150,000 mPa.s., preferably 250 to 50,000 mPa.s. wherein 1 Pa.s is 1 kg·m⁻¹·s⁻¹.

According to another preferred embodiment, the present modified polyether is composed of one or more α-silane modified polyethers such as 2 or 3 silane modified polyethers or α-silane modified polyethers although polyethers composed of four, five, six or seven or more are contemplated within the context of the present invention.

Silane modified polyethers are comprised of silane moieties coupled to polyether backbones. Alternatively, polyether chains can also be end-capped with di-or trialkoxysilyl groups provided through urethane coupling with an aliphatic bridge positioned between the urethane group and the silane. This aliphatic bridge can be a methylene group providing an α-silane-terminated polyether. An especially preferred α-silane modified polyether according to the present invention is a silane-modified polymers designated as GENIOSIL^{®} XB 502 (viscosity 700 to 1400 mPa.s.), GENIOSIL^{®} STP-E10 (viscosity 7,000 to 13,000 mPa.s.) and GENIOSIL^{®} STP-E30 (viscosity 25,000 to 45,000 mPa.s.) available from Wacker (Munich, Germany).

According to a preferred embodiment of the invention, the present high strength and moisture resistant adhesives comprise 45 to 70% (wt%), of a silane modified polyether preferably 50 to 65% (wt). Examples of suitable weight percentages of the present modified polyether include 40%, 55% or 60%.

According to yet another preferred embodiment of this first aspect of the invention, the present high strength and moisture resistant adhesives comprise 20% to 55% (wt) of one or more filler material, preferably 30% to 50% (wt). Examples of suitable weight percentages of the present filler material include 25%, 35% or 45%.

The present high strength and moisture resistant adhesives comprise one or more adhesion promotors, such as two or more or three or more. Preferably, the present one or more adhesion promotors are present in an amount a total amount of 0.3 to 15% (wt) such as 0.3%, 0.6%, 1%, 1.5%, 2%, 2.5%, 3%, 3.5%, 4% , 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14.0%, 14.5% or 15%.

According to the present invention, preferred one or more adhesion promotors suitable to be used are chosen from the group consisting of
- an epoxy functionalized alkoxy silane such as 3-glycidoxypropyltrimethoxysilane, 3-glycidoxypropyltriethoxysilane, 3-glycidoxypropyl methyldimethoxysilane, 3-glycidoxypropyl methyldiethoxysilane, 2-(3,4-epoxycyclohexyl)ethyl trimethoxysilane, 2-(3,4-epoxycyclohexyl)ethyl triethoxysilane, 2-(3,4-epoxycyclohexyl)ethyl methyldimethoxysilane, 2-(3,4-epoxycyclohexyl)ethyl methyldiethoxysilane, Epoxy silane Polymer;
- an amino functionalized alkoxy silane or siloxanes such as 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, 3-aminopropylmethyldiethoxysilane, 3-ureidopropyltrimethoxysilane, 3-ureidopropyltriethoxysilane, benzylamino-silane, N-phenyl-gamma-aminopropyltrimethoxysilane, N-phenylaminomethyltrimethoxysilane, N-cyclohexylaminomethylmethyldiethoxysilane, N-cyclohexylaminomethyltriethoxysilane, N-ethyl-3-trimethoxysilyl-methylpropamine, N-cyclohexyl-3-aminopropyltrimethoxysilane, 3-(2-aminomethylamino)propyltriethoxysilane, (cyclohexyl)methyldimethoxysilane, dicyclopentyldimethoxysilane, phenyltriethoxysilane, phenyltriethoxysilane, oligomeric diamino silane/ aminofunctional oligosiloxane, cyclo[3-((2 aminoethyl)amino)propyl] methylsiloxaan, poly[3-(2-aminoethyl)aminopropyl]methyl siloxaan, polydimethylsiloxane compounds with aminoalkyl groups, 3-aminofunctional silane, multifunctional aminosilane, aminofunctional silane and siloxane primer, aminofunctional siloxane, silane terminated polyether + additive, N-(n-butyl)-3-aminopropyltrimethoxysilane, bis (3-trimethoxysilylpropyl)amine, bis (3-triethoxysilylpropyl)amine, amino functional silane oligomer, amino-functional oligosiloxane, N-2-(Aminoethyl)-3-aminoPropylmethyldiethoxysilane, N-2-(Aminoethyl)-3-aminooisoButylmethyldimethoxysilane, 3-AminopropylMethyldimethoxysilane, 3-(2-(2-Aminoethylamino)ethylamino)propyltrimethoxysilane, N-(n-butyl)-3-aminopropyltriethoxysilane, Diamino silane mixture, 3-Anilinopropyltrimethoxysilane, N,N-Diethylaminopropyltrimethoxysilane, N,N-Dimethylaminopropyltrimethoxysilane, Butylaminemethyltriethoxysilane, N-cyclohexyl(aminomethyl)triethoxysilane, 2-Aminoethylaminomethyltriethoxysilane, Diethylaminomethyltriethoxysilane, Amino silane hydrolysate, Amino silane Polymer
- an anhydride functionalized alkoxy silane such as 3-(triethoxysilyl)propyl-succinicanhydride or thiocarboxylate functional silane
- an alkyl functionalized alkoxy silane such as dodecyltrimethoxysilane, octadecyltrimethoxysilane, n-octyltriethoxysilane, methyltrimethoxysilane, methyltriethoxysilane, n-propyltriethoxysilane, n-propyltrimethoxysilane, n-octyltrimethoxysilane, dimethyldimethoxysilane, dimethyldiethoxysilane, hexadecyltrimethoxysilane, trimethylethoxysilane, (cyclohexyl)methyldimethoxysilane, dicyclopentyldimethoxysilane; n-Dodecylmethyldiethoxysilane, n-Dodecyltriethoxysilane, Octadecyltriethoxysilane, n-Hexadecyltriethoxysilane, Tetraethoxysilane-28, Tetraethoxysilane-32, Tetraethoxysilane-40, 1,2 Bis(triethoxysilyl)ethane, 1,2 Bis(trimethoxysilyl)ethane, Methylpropyldiethoxysilane, Methylpropyldimethoxysilane, Isooctyltriethoxysilane, Octylmethyldimethoxysilane, Octylmethyldiethoxysilane, n-Octadecylmethyldimethoxysilane, n-Octadecylmethyldiethoxysilane
- an chloro functionalized alkoxy silane such as 3-chloropropyltriethoxysilane, 3-chloropropyltrimethoxysilane, 3-chloropropylmethyldimethoxysilane, 3-chloropropylmethyldiethoxysilane, Trichlorosilane, Methylpropyldichlorosilane, 3-chloropropyltrichlorosilane, 3-chloropropyldichloromethylsilane, n-Propyltrichlorosilane, 3-Acetoxypropylmethyldichlorosilane, Vinyltrichlorosilane, n-Octyltrichlorosilane, Isooctyltrichlorosilane, Octyl(methyl)dichlorosilane, n-Dodecyltrichlorosilane, n-Dodecylmethyldichlorosilane, n-Hexadecyltrichlorosilane, n-Hexadecylmethyldichlorosilane, n-Octadecyltrichlorosilane, n-Octadecylmethyldichlorosilane, Chloromethyltrichlorosilane, Chloromethyltriethoxysilane, 3-Chloropropyltriethoxysilane, 3-Chloropropyltrimethoxysilane, 3-Chloropropylmethyldimethoxysilane, 3-Chloropropylmethyldiethoxysilane, 3-Chloropropylmethyldipropoxysilane
- an phenyl functionalized alkoxy silane such as phenyltrichlorosilane, phenyltriethoxysilane, phenyltrimethoxysilane, dichlorodiphenylsilane, diphenyldimethoxysilane, diphenyldiethoxysilane, methylphenyldimethoxysilane, methylphenyldiethoxysilane
- an acryloxy functionalized alkoxy silane such as 3-methacryloxypropyltrimethoxysilane, 3-methacryloxypropylmethyldimethoxysilane, 3-methacryloxypropylmethyldiethoxysilane, 3-methacryloxypropylTriethoxysilane, (methacryloxymethyl)-methyldimethoxysilane, methacryloxymethyltrimethoxysilane, (methacryloxymethyl)-methyldiethoxysilane, methacryloxymethyltriethoxysilane, 3-methacryloxypropyltriacetoxysilane, 3-Methacryloxypropyltriisopropoxysilane, 3-Acetoxypropyltrimethoxysilane, 3-Acryloxypropyltrimethoxysilane, (3-Acryloxypropyl)methyldimethoxysilane, Triacetoxyethylsilane, 1,2-Bis(triethoxysilyl)ethan, Methacrylicsilane preparation, Methacrylicsilane preparation, Alkoxyl silane Polymer, n-Propyltriecetoxysilane, Modified acetoxy silane, 3-Mercaptopropyltrimethoxysilane, 1,2-bis(trimethoxysilyl)ethane, Tetramethoxysilane, Tetraethoxysilane, Tetrapropoxysilane
- a sulf functionalized alkoxy silane such as bis[3-(triethoxysilyl)propyl]tetrasulfide, 3-Mercaptopropyltrimethoxysilane, 3-mercaptopropyltriethoxysilane, 3-thiocyanatopropyltriethoxysilane, 3-(isocyanatopropyl)-trimethoxysilane
- an trialkoxy functionalized silane such as trimethoxysilane, 3-isocyanatopropyltriethoxysilane, 3-isocyanatopropyltrimethoxysilane, (isocyanatomethyl)methyldimethoxysilane, N-methyl[3-(trimethoxysilyl)-propyl]carbamate, N-trimethoxysilylmethyl-O-methylcarbamate, N-dimethoxy(methyl)silylmethyl-O-methyl-carbamate, Methyldimethoxysilane, Methyldiethoxysilane, Tris-[3-(trimethoxysilyl)propyl]-isocyanurate

According to an especially preferred embodiment of the present invention, the present adhesion promotors are selected from the group consisting of an epoxy functionalized alkoxy silane, in an amount of 0.3 to 5.0% (wt) and an amino functionalized alkoxy silane, in an amount of 0.3 to 5.0% (wt) and an amino functionalized siloxane, preferably cyclo[3-((2 aminoethyl)amino)propyl] methylsiloxaan, poly[3-(2-aminoethyl)aminopropyl]methyl siloxaan in amount of 0.3 to 5.0 % (wt).

Preferably, the present one or more adhesion promotors are present in an amount of 0.3 to 15 % (wt) such as 0.3,%, 0.6%, 1%, 1.5%, 2%, 2.5%, 3%, 3.5%, 4,0%, 4.5%, 5.0%, 5.5%, 6.0%, 6.5%, 7.0%, 7,5%, 8.0%, 8.5%, 9,0%, 9.5%, 10%, 10.5%, 11%, 11.5%, 12%, 12.5%, 13%, 13.5%, 14.0%, 14.5% or 15% (wt).

Epoxy functionalized alkoxy silanes hydrolyze in the presence of moisture to form silanols, which than can react with themselves to produce siloxanes. In addition, it leads to an increase in water resistance.

According to yet another preferred embodiment of this first aspect of the invention, the present high strength and moisture resistant adhesives comprise 0.3% to 5.0% (wt) of one or more epoxy functionalized alkoxy silane, preferably 1.0% to 4.0% (wt), more preferably 2.0% to 3.0% (wt). Examples of suitable weight percentages of the epoxy functionalized alkoxy silane include 1.8%, 2.3% or 2.8%.

Amino functionalized alkoxy silanes as an adhesion promotor to improve the mechanical properties e.g. mechanical strength. In addition, it leads to an increase in water resistance. Due to the nature of the amino group, this substance reacts as a base. The silane hydrolyzes autocatalytically in the presence of moisture (methanol is released) to form silanols, which can subsequently react with themselves to produce siloxanes or can bind to inorganic substrates.

According to yet another preferred embodiment of this first aspect of the invention, the present high strength and moisture resistant adhesives comprise 0.3% to 5.0% (wt) of one or more amino functionalized alkoxy silane, preferably 1.0% to 4.0% (wt), more preferably 2.0% to 3.0% (wt). Examples of suitable weight percentages of the amino functionalized akoxy silane include 1.8%, 2.3% or 2.8%.

Amino functionalized siloxanes are used as an adhesion promotor to improve, amongst others, hydrophobicity e.g. improvement of water resistance . In addition, amino functionalized siloxanes provide an improved adhesion on wood. An especially preferred amino functionalized siloxane according to the present invention is an amino functionalized siloxane designated as Wacker GF 995 available from Wacker Munich, Germany

According to yet another preferred embodiment of this first aspect of the invention, the present high strength and moisture resistant adhesives comprise 0.3% to 5.0% (wt) of one or more amino functionalized siloxane, preferably 1.0% to 4.0% (wt), more preferably 2.0% to 3.0% (wt). Examples of suitable weight percentages of the amino functionalized siloxane include 1.8%, 2.3% or 2.8%.

The high strength and moisture resistant adhesive comprise a radical scavenger preferably selected from the group of hindered amine light stabilizers or UV absorbers such as benzotriazole, benzophenone, oxanilide or hydroxyphenyltrianzine.

The high strength and moisture resistant adhesive comprise a moisture scavenger preferably selected from the group of vinyl functionalized alkoxy silanes such as vinyltriethoxysilane, vinyltrimethoxysilane, dichloromethylvinylsilane, dimethoxymethylvinylsilane, diethoxymethylvinylsilane, vinyltriacetoxysilane, chlorodimethylvinylsilane, vinyltrichlorosilane, vinyltris(2-methoxyethoxy)silane, 1,3,5,7-tetravinyl-1,3,5,7-tetramethylcyclotetrasiloxane, oligomeric vinylsilane, Vinyltri(isopropoxy)silane, Vinyl silane Polymer, Vinylsilane preparation, Vinyltriacetoxysilane.

The high strength and moisture resistance adhesive comprise an antioxidant such as a primary antioxidant or a secondary antioxidant, hindered phenyl AO, phosphite AO or thioether AO

The present high strength and moisture resistant adhesive comprise a rheological modifier preferably selected from the group consisting of a polyolefin blend, hydrophobic silica, hydrophilic silica, polyamide wax and ultra fine precipitated calcium carbonate grades

The high strength and moisture resistant adhesive comprise a catalyst a dibasic Amine, tin compounds and a titanate catalyst

According to a second aspect, the present invention relates to the use of a combination of a silane or α-silane modified polyether, Neuburg Siliceous Earth filler material and the combination of an epoxy functionalized alkoxy silane an amino functionalized alkoxy silane and an amino functionalized siloxane for providing an adhesive.

The present invention will further be illustrated in the following example of an especially preferred embodiment of the present invention.

### Example

The following composition providing a high strength and moisture resistant adhesive was prepared (amounts are indicated in %(wt)):

| **Composition** | | | | | | | | | | | | |
|---|---|---|---|---|---|---|---|---|---|---|---|---|
| MA 480 | | 54.20 | | | | | | | | | | |
| Polymer ST 80 | | | 54.20 | | | | | | | | | |
| Geniosil XB 502 | 40.98 | | | 40.98 | 40.98 | 42.14 | 40.98 | 42.14 | 40.98 | 40.98 | 40.98 | |
| Silane modified polyether | 13.66 | | | 13.66 | 13.66 | 14.05 | 13.66 | 14.05 | 13.66 | 13.66 | 13.66 | |
| Vinyltrimethoxy silane | 3.28 | 3.25 | 3.35 | 3.28 | 3.28 | 3.37 | 3.28 | 3.37 | 3.28 | 3.28 | 3.28 | |
| HALS | 0.55 | 0.54 | 0.54 | 0.55 | 0.55 | 0.55 | 0.55 | 0.55 | 0.55 | 0.55 | 0.55 | |
| Benzene propanoic acid, | 0.55 | 0.54 | 0.54 | 0.55 | 0.55 | 0.55 | 0.55 | 0.55 | 0.55 | 0.55 | 0.55 | |
| Sillitin V85 | 32.79 | 32.52 | 32.52 | | | 32.79 | 32.79 | 32.79 | 32.79 | 32.79 | 32.79 | |
| Filler material B | | | | 32.79 | | | | | | | | |
| Filler material C | | | | | 32.79 | | | | | | | |
| 3-Glycidoxypropyl trimethoxysilane | 2.73 | 2.71 | 2.71 | 2.73 | 2.73 | | | 2.81 | 2.73 | 2.73 | 2.73 | |
| 3-Glycidoxypropyl Methyldiethoxy silane | | | | | | | 2.73 | | | | | |
| cyclo[3-((2 aminoethyl) | 2.73 | 2.71 | 2.71 | 2.73 | 2,73 | 2.81 | 2,73 | | | 2,73 | 2,73 | |
| amino)propyl] methylsiloxaan, poly[3-(2-aminoethyl)amin opropyl]methyl siloxaan | | | | | | | | | | | | |
| N-2-(Aminoethyl)-3-amino Propylmethyl dimethoxysilane | 2.73 | 2.71 | 2.71 | 2.73 | 2.73 | 2.81 | 2.73 | | 2.81 | 2.73 | | |
| 3-Aminopropyl triethoxysilane | | | | | | | | | | | 2.73 | |
| N-2-(Aminoethyl)-3-aminopropyl trimethoxysilane | | | | | | | | | | 2.73 | | 2.73 |
| Tin Catalyst | | 0.81 | 0.81 | | | | | | | | | |

| **Results** | | | | | | | | | | | | |
|---|---|---|---|---|---|---|---|---|---|---|---|---|
| Conditioning sequence 1 ≥ 10 N/mm² | 12.68 | 7.88 | 9.6 | 11.2 | 10.8 | 12.7 | | 13.2 | 11.0 | 10.8 | 10.8 | 12.5 |
| Conditioning sequence 3 ≥ 4 N/mm² | 5.2 | 0.73 | 2.03 | 3.30 | 2.50 | 3.2 | | 5.6 | 1.7 | 2.7 | 5.0 | 4.4 |
| Conditioning sequence 5 ≥ 4 N/mm² | 4.1 | 0.43 | 1.53 | 3.01 | 3.10 | 3.6 | | 4.8 | 3.0 | 2.7 | 5.1 | 4.8 |
| WATT 91 ≥ 5,5 N/mm² | 9.11 | 4.85 | 5.83 | 8.2 | 7.6 | 8.11 | | 9.3 | 7.3 | 7.5 | 6.1 | 8.7 |

The above adhesive was tested in conformity with EN204/EN205 and the test conditions can be summarized as:
Wood species: Beech (*Fagus Sylvatica*)
Moisture content of wood: 12±1%
Conditioning: 20±2°C and 65±5% r.h.
Surface treatment before gluing: sanding with abrasing paper grit size 100
Number of test specimen: 20
Adhesive layer: thin
Gluing area: 200 mm2
Testing speed: 50 mm/min
Test Temperature: 23±2°C
Gluing temperature: 20±2°C
*Gluing conditions*
Coverage: 150 - 300 /m2
Application of glue: to one or both surfaces
Pressure: 0.2 and 1,0 N/mm
Pressure time: 60 and 600 min

Under the above conditions, the present adhesives provided:

| Conditioning Sequence: | Duration and condition | Strength |
|---|---|---|
| 1 (EN 204/205) | 7 days in standard atmosphere | ≥ 10 N/mm2 |
| 3 (EN 204/205) | 7 days in standard atmosphere | ≥ 4 N/mm2 |
| | 4 days in water at (20±5)°C | |
| 5 (EN 204/205) | 7 days in standard atmosphere | ≥ 4 N/mm2 |
| | 6 h boiling water | |
| | 2 h in water (20±5)°C | |
| WATT 91 (EN14257)¹ | | ≥ 5,5 N/mm2 |

| | | |
|---|---|---|
| ¹⁾ NEN-EN 14257: Determination of tensile strength of lab joints at elevated temperature. | | |

## Claims

1. High strength and moisture resistant adhesive suitable to be used as a moisture curing adhesive, said adhesive comprises:
a) 25 to 75 % (wt) of one or more modified polyethers, wherein the one or more modified polyethers are silane modified polyethers;
b) 10 to 60% (wt) of one or more filler material;
c) 0.3 to 15% (wt) adhesion promotors said adhesion promotors are a combination of an epoxy functionalized alkoxy silane, an amino functionalized alkoxy silane and an amino functionalized siloxane;
wherein said adhesive further comprises one or more compounds selected from the group consisting of a radical scavenger, a moisture scavenger, an anti-oxidant, a rheological modifier, and a catalyst;
wherein said one or more filler material is Neuburg Siliceous Earth; and
wherein high strength is defined as:
1) having a strength of more than ≥10 N/mm² after 7 days in a standard atmosphere;
2) having a strength of more than ≥4 N/mm² after 7 days in a standard atmosphere and 4 days in water at 20 ± 5 °C;
3) having a strength of more than ≥4 N/mm² after 7 days in a standard atmosphere 6 hours in boiling water and 2 hours in water at 20 ± 5 °C;
wherein the present strength is determined in accordance with EN 204: Classification of thermoplastic wood adhesives for non-structural applications and EN205: Wood adhesives for non-structural applications or determination of tensile shear strength of lap joints.
4) having a strength of more than ≥ 5.5 N/mm² after 7 days in standard atmosphere 1 hour in a preheated fan oven, at 80 ± 2,0 °C for 60 ± 2 min
wherein the present strength is determined in accordance with EN 14257: Determination of tensile strength of lap joints at elevated temperature (WATT 91)

2. High strength and moisture resistant adhesive according to claim 1 comprising:
a) 25 to 75 % (wt) of one or more modified polyethers, wherein the one or more modified polyethers are silane modified polyethers;
b) 10 to 60% (wt) of one or more siliceous filler material;
c) 0.3 to 5.0% (wt) of one or more epoxy functionalized alkoxy silane
d) 0.3 to 5.0% (wt) of one or more amino funcionalized alkoxy silane
e) 0.3 to 5.0 % (wt) or one or more amino fuctionalized siloxanes;
f) a radical scavenger, preferably 0.1 to 0.5% (wt);
g) a moisture scavenger, preferably 0.5 to 5% (wt);
h) an anti-oxidant, preferably 0.1 to 1% (wt);
i) a rheological modifier, preferably 0.2 to 5.0% (wt); and
j) a catalyst, preferably 0.05 to 5% (wt).

3. High strength and moisture resistant adhesive according to claim 1 or claim 2 wherein said one or more modified polyethers have a dynamic viscosity in the range of 250 to 150,000 mPa.s., preferably 250 to 50,000 mPa.s.

4. High strength and moisture resistant adhesive according to any one of the claims 1 to 3, wherein said silane modified polyethers are α-silane modified polyethers.

5. High strength and moisture resistant adhesive according to any of the claims 1 to 4, wherein said adhesive comprises 45 to 70% (wt) of one or more silane modified polyethers, preferably 50 to 65% (wt).

6. High strength and moisture resistant adhesive according to any of the claims 1 to 5, wherein said adhesive comprises 20 to 55% (wt) filler material, preferably, 30 to 50% (wt).

7. High strength and moisture resistant adhesive according to any of the claims 1 to 6, wherein said adhesion promotors comprise:
- an epoxy functionalized alkoxy silane selected from the group consisting of 3-glycidoxypropyltrimethoxysilane, 3-glycidoxypropyltriethoxysilane, 3-glycidoxypropyl methyldimethoxysilane, 3-glycidoxypropyl methyldiethoxysilane, 2-(3,4-epoxycyclohexyl)ethyl trimethoxysilane, 2-(3,4-epoxycyclohexyl)ethyl triethoxysilane, 2-(3,4-epoxycyclohexyl)ethyl methyldimethoxysilane, 2-(3,4-epoxycyclohexyl)ethyl methyldiethoxysilane and Epoxy silane Polymer
- an amino functionalized alkoxy silane or siloxanes selected from the group consisting of 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, 3-aminopropylmethyldiethoxysilane, 3-ureidopropyltrimethoxysilane, 3-ureidopropyltriethoxysilane, benzylamino-silane, N-phenyl-gamma-aminopropyltrimethoxysilane, N-phenylaminomethyltrimethoxysilane, N-cyclohexylaminomethylmethyldiethoxysilane, N-cyclohexylaminomethyltriethoxysilane, N-ethyl-3-trimethoxysilyl-methylpropamine, N-cyclohexyl-3-aminopropyltrimethoxysilane, 3-(2-aminomethylamino)propyltriethoxysilane, (cyclohexyl)methyldimethoxysilane, dicyclopentyldimethoxysilane, phenyltriethoxysilane, phenyltriethoxysilane, oligomeric diamino silane/ aminofunctional oligosiloxane, cyclo[3-((2 aminoethyl)amino)propyl] methylsiloxaan, poly[3-(2-aminoethyl)aminopropyl]methyl siloxaan, polydimethylsiloxane compounds with aminoalkyl groups, 3-aminofunctional silane, multifunctional aminosilane, aminofunctional silane and siloxane primer, aminofunctional siloxane, silane terminated polyether + additive, N-(n-butyl)-3-aminopropyltrimethoxysilane, bis (3-trimethoxysilylpropyl)amine, bis (3-triethoxysilylpropyl)amine, amino functional silane oligomer, amino-functional oligosiloxane, N-2-(Aminoethyl)-3-aminoPropylmethyldiethoxysilane, N-2-(Aminoethyl)-3-aminooisoButylmethyldimethoxysilane, 3-AminopropylMethyldimethoxysilane, 3-(2-(2-Aminoethylamino)ethylamino)propyltrimethoxysilane, N-(n-butyl)-3-aminopropyltriethoxysilane, Diamino silane mixture, 3-Anilinopropyltrimethoxysilane, N,N-Diethylaminopropyltrimethoxysilane, N,N-Dimethylaminopropyltrimethoxysilane, Butylaminemethyltriethoxysilane, N-cyclohexyl(aminomethyl)triethoxysilane, 2-Aminoethylaminomethyltriethoxysilane, Diethylaminomethyltriethoxysilane, Amino silane hydrolysate and Amino silane Polymer
- an alkyl functionalized alkoxy silane selected from the group consisting of dodecyltrimethoxysilane, octadecyltrimethoxysilane, n-octyltriethoxysilane, methyltrimethoxysilane, methyltriethoxysilane, n-propyltriethoxysilane, n-propyltrimethoxysilane, n-octyltrimethoxysilane, dimethyldimethoxysilane, dimethyldiethoxysilane, hexadecyltrimethoxysilane, trimethylethoxysilane, (cyclohexyl)methyldimethoxysilane, dicyclopentyldimethoxysilane; Dodecylmethyldiethoxysilane, n-Dodecyltriethoxysilane, Octadecyltriethoxysilane, n-Hexadecyltriethoxysilane, Tetraethoxysilane-28, Tetraethoxysilane-32, Tetraethoxysilane-40, 1,2 Bis(triethoxysilyl)ethane, 1,2 Bis(trimethoxysilyl)ethane, Methylpropyldiethoxysilane, Methylpropyldimethoxysilane, Isooctyltriethoxysilane, Octylmethyldimethoxysilane, Octylmethyldiethoxysilane, n-Octadecylmethyldimethoxysilane, n-Octadecylmethyldiethoxysilane.

8. High strength and moisture resistant adhesive according to any of the claims 1 to 7, wherein said one or more adhesion promotors further comprise:
- an anhydride functionalized alkoxy silane preferably selected from the group consisting of 3-(triethoxysilyl)propyl-succinicanhydride and thiocarboxylate functional silane;
- an chloro functionalized alkoxy silane preferably selected from the group consisting of 3-chloropropyltriethoxysilane, 3-chloropropyltrimethoxysilane, 3-chloropropylmethyldimethoxysilane, 3-chloropropylmethyldiethoxysilane; Trichlorosilane, Methylpropyldichlorosilane, 3-chloropropyltrichlorosilane, 3-chloropropyldichloromethylsilane, n-Propyltrichlorosilane, 3-Acetoxypropylmethyldichlorosilane, Vinyltrichlorosilane, n-Octyltrichlorosilane, Isooctyltrichlorosilane, Octyl(methyl)dichlorosilane, n-Dodecyltrichlorosilane, n-Dodecylmethyldichlorosilane, n-Hexadecyltrichlorosilane, n-Hexadecylmethyldichlorosilane, n-Octadecyltrichlorosilane, n-Octadecylmethyldichlorosilane, Chloromethyltrichlorosilane, Chloromethyltriethoxysilane, 3-chloropropyltriethoxysilane, 3-chloropropyltrimethoxysilane, 3-Chloropropylmethyldimethoxysilane, 3-Chloropropylmethyldiethoxysilane and 3-Chloropropylmethyldipropoxysilane
- an phenyl functionalized alkoxy silane preferably selected from the group consisting of phenyltrichlorosilane, phenyltriethoxysilane, phenyltrimethoxysilane, dichlorodiphenylsilane, diphenyldimethoxysilane, diphenyldiethoxysilane, methylphenyldimethoxysilane and methylphenyldiethoxysilane
- an acryloxy functionalized alkoxy silane preferably selected from the group consisting of 3-methacryloxypropyltrimethoxysilane, 3-methacryloxypropylmethyldimethoxysilane, 3-methacryloxypropylmethyldiethoxysilane, 3-methacryloxypropylTriethoxysilane, (methacryloxymethyl)-methyldimethoxysilane, methacryloxymethyltrimethoxysilane, (methacryloxymethyl)-methyldiethoxysilane, methacryloxymethyltriethoxysilane, 3-methacryloxypropyltriacetoxysilane, 3-Methacryloxypropyltriisopropoxysilane, 3-Acetoxypropyltrimethoxysilane, 3-Acryloxypropyltrimethoxysilane, (3-Acryloxypropyl)methyldimethoxysilane, Triacetoxyethylsilane, 1,2-Bis(triethoxysilyl)ethan, Methacrylicsilane preparation, Methacrylicsilane preparation, Alkoxyl silane Polymer, n-Propyltriecetoxysilane, Modified acetoxy silane, 3-Mercaptopropyltrimethoxysilane, 1,2-bis(trimethoxysilyl)ethane, Tetramethoxysilane, Tetraethoxysilane, and Tetrapropoxysilane
- an sulf functionalized alkoxy silane preferably selected from the group consisting of bis[3-(triethoxysilyl)propyl]tetrasulfide, 3-Mercaptopropyltrimethoxysilane, 3-mercaptopropyltriethoxysilane, 3-thiocyanatopropyltriethoxysilane and 3-(isocyanatopropyl)-trimethoxysilane; and
- an trialkoxy functionalized silane preferably selected from the group consisting of trimethoxysilane, 3-isocyanatopropyltriethoxysilane, 3-isocyanatopropyltrimethoxysilane, (isocyanatomethyl)methyldimethoxysilane, N-methyl[3-(trimethoxysilyl)-propyl]carbamate, N-trimethoxysilylmethyl-O-methylcarbamate, N-dimethoxy(methyl)silylmethyl-O-methyl-carbamate. Methyldimethoxysilane, Methyldiethoxysilane and Tris-[3-(trimethoxysilyl)propyl]-isocyanurate

9. High strength and moisture resistant adhesive according to any of the claims 1 to 8, wherein said adhesive comprises 0.3 to 5.0% (wt) of one or more epoxy functionalized alkoxy silanes, preferably 1.0 to 4.0% (wt), more preferably 2.0 to 3.0 % (wt); and/or wherein said adhesive comprises 0.3 to 5.0% (wt) of one or more amino functionalized alkoxy silanes, preferably 1.0 to 4.0% (wt), more preferably 2.0 to 3.0 % (wt); and/or wherein said adhesive comprise 0.3 to 5.0% (wt) of one or more amino functionalized siloxanes, preferably 1.0 to 4.0% (wt), more preferably 2.0 to 3.0% (wt).

10. High strength and moisture resistant adhesive according to any of the claims 1 to 9, wherein said radical scavenger is selected of the group hindered amine light stabilisers or UV absorbers such as benzotriazole, benzophenone, oxanilide or hydroxyphenyltrianzine.

11. High strength and moisture resistant adhesive according to any of the claims 1 to 10, wherein
- said moisture scavenger is selected of the group vinyl functionalized alkoxy silanes, vinyltriethoxysilane, vinyltrimethoxysilane, dichloromethylvinylsilane, dimethoxymethylvinylsilane, diethoxymethylvinylsilane, vinyltriacetoxysilane, chlorodimethylvinylsilane, vinyltrichlorosilane, vinyltris(2-methoxyethoxy)silane, 1,3,5,7-tetravinyl-1,3,5,7-tetramethylcyclotetrasiloxane, oligomeric vinylsilane, Vinyltri(isopropoxy)silane, Vinyl silane Polymer, Vinylsilane preparation, Vinyltriacetoxysilane; and/or
- said antioxidant is a primary antioxidant or a secondary antioxidant, hindered phenyl AO, phosphite AO or thioether AO; and/or
- said rheological modifier is selected from the group consisting of a polyolefin blend, silica, polyamide wax and UF-PCC.

12. High strength and moisture resistant adhesive according to any of the claims 1 to 11, wherein said catalyst is a dibasic amine, tin compound or a titanate catalyst.

13. Use of a combination of a silane modified polyether, preferably an α-silane modified polyether, a Neuburg Siliceous Earth filler material, an epoxy functionalized alkoxy silane, an amino fuctionalized alkoxy silane and an amino functionalized siloxane for providing a high strength, moisture resistant and moisture curing adhesive
wherein high strength is defined as:
1) having a strength of more than ≥10 N/mm² after 7 days in a standard atmosphere;
2) having a strength of more than ≥4 N/mm² after 7 days in a standard atmosphere and 4 days in water at 20 ± 5 °C;
3) having a strength of more than ≥4 N/mm² after 7 days in a standard atmosphere 6 hours in boiling water and 2 hours in water at 20 ± 5 °C;
wherein the present strength is determined in accordance with EN 204: Classification of thermoplastic wood adhesives for non-structural applications and EN205: Wood adhesives for non-structural applications or determination of tensile shear strength of lap joints.
4) having a strength of more than ≥ 5.5 N/mm² after 7 days in standard atmosphere 1 hour in a preheated fan oven, at 80 ± 2,0 °C for 60 ± 2 min
wherein the present strength is determined in accordance with EN 14257: Determination of tensile strength of lap joints at elevated temperature (WATT 91).

14. Use according to claim 13, wherein
- said epoxy functionalized alkoxy silane is 3-glycidoxypropyltrimethoxysilane, 3-glycidoxypropyltriethoxysilane, 3-glycidoxypropyl methyldimethoxysilane, 3-glycidoxypropyl methyldiethoxysilane, 2-(3,4-epoxycyclohexyl)ethyl trimethoxysilane, 2-(3,4-epoxycyclohexyl)ethyl triethoxysilane, 2-(3,4-epoxycyclohexyl)ethyl methyldimethoxysilane, 2-(3,4-epoxycyclohexyl)ethyl methyldiethoxysilane and Epoxy silane Polymer; and/or
- said amino functionalized alkoxy silane is 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, 3-aminopropylmethyldiethoxysilane, 3-ureidopropyltrimethoxysilane, 3-ureidopropyltriethoxysilane, benzylamino-silane, N-phenyl-gamma-aminopropyltrimethoxysilane, N-phenylaminomethyltrimethoxysilane, N-cyclohexylaminomethylmethyldiethoxysilane, N-cyclohexylaminomethyltriethoxysilane, N-ethyl-3-trimethoxysilyl-methylpropamine, N-cyclohexyl-3-aminopropyltrimethoxysilane, 3-(2-aminomethylamino)propyltriethoxysilane, (cyclohexyl)methyldimethoxysilane, dicyclopentyldimethoxysilane, phenyltriethoxysilane, phenyltriethoxysilane, oligomeric diamino silane/ aminofunctional oligosiloxane, cyclo[3-((2 aminoethyl)amino)propyl] methylsiloxaan, poly[3-(2-aminoethyl)aminopropyl]methyl siloxaan, polydimethylsiloxane compounds with aminoalkyl groups, 3-aminofunctional silane, multifunctional aminosilane, aminofunctional silane and siloxane primer, aminofunctional siloxane, silane terminated polyether + additive, N-(n-butyl)-3-aminopropyltrimethoxysilane, bis (3-trimethoxysilylpropyl)amine, bis (3-triethoxysilylpropyl)amine, amino functional silane oligomer, amino-functional oligosiloxane; N-2-(Aminoethyl)-3-aminoPropylmethyldiethoxysilane, N-2-(Aminoethyl)-3-aminooisoButylmethyldimethoxysilane, 3-AminopropylMethyldimethoxysilane, 3-(2-(2-Aminoethylamino)ethylamino)propyltrimethoxysilane, N-(n-butyl)-3-aminopropyltriethoxysilane, Diamino silane mixture, 3-Anilinopropyltrimethoxysilane, N,N-Diethylaminopropyltrimethoxysilane, N,N-Dimethylaminopropyltrimethoxysilane, Butylaminemethyltriethoxysilane, N-cyclohexyl(aminomethyl)triethoxysilane, 2-Aminoethylaminomethyltriethoxysilane, Diethylaminomethyltriethoxysilane, Amino silane hydrolysate and Amino silane Polymer.

## Patentansprüche

1. Hochfester und feuchtigkeitsbeständiger Klebstoff, der geeignet ist, um als ein feuchtigkeitshärtender Klebstoff verwendet zu werden, wobei der Klebstoff umfasst:
a) zu 25 bis 75 % (Gew.) ein oder mehrere modifizierte Polyether, wobei der eine oder die mehreren modifizierten Polyether silanmodifizierte Polyether sind;
b) zu 10 bis 60 % (Gew.) ein oder mehrere Füllstoffe;
c) zu 0,3 bis 15 % (Gew.) Haftvermittler, wobei die Haftvermittler eine Kombination aus einem epoxyfunktionalisierten Alkoxysilan, einem aminofunktionalisierten Alkoxysilan und einem aminofunktionalisierten Siloxan sind;
wobei der Klebstoff ferner eine oder mehrere Verbindungen umfasst, die aus der Gruppe ausgewählt sind, bestehend aus einem Radikalfänger, einem Feuchtigkeitsfänger, einem Antioxidationsmittel, einem Rheologiemodifikator und einem Katalysator;
wobei der eine oder die mehreren Füllstoffe Neuburger Kieselerde ist; und
wobei hohe Festigkeit definiert ist als:
1) eine Festigkeit von mehr als ≥10 N/mm² nach 7 Tagen in einem Normalklima aufweisend;
2) eine Festigkeit von mehr als ≥4 N/mm² nach 7 Tagen in einem Normalklima und 4 Tagen in Wasser bei 20 ± 5 °C aufweisend;
3) eine Festigkeit von mehr als ≥4 N/mm² nach 7 Tagen in einem Normalklima, 6 Stunden in kochendem Wasser und 2 Stunden in Wasser bei 20 ± 5 °C aufweisend;
wobei die aktuelle Festigkeit gemäß EN 204 bestimmt wird: Klassifizierung thermoplastischer Holzklebstoffe für nicht strukturelle Anwendungen und EN205: Holzklebstoffe für nicht-strukturelle Anwendungen oder Bestimmung einer Zugscherfestigkeit von Überlappverbindungen.
4) eine Festigkeit von mehr als ≥ 5,5 N/mm² nach 7 Tagen in dem Normalklima, 1 Stunde in einem vorgeheizten Umluftofen bei 80 ± 2,0 °C für 60 ± 2 min aufweisend
wobei die aktuelle Festigkeit gemäß EN 14257 bestimmt wird: Bestimmung der Zugfestigkeit von Überlappverbindungen bei erhöhter Temperatur (WATT 91)

2. Hochfester und feuchtigkeitsbeständiger Klebstoff nach Anspruch 1, umfassend:
a) zu 25 bis 75 % (Gew.) ein oder mehrere modifizierte Polyether, wobei der eine oder die mehreren modifizierten Polyether silanmodifizierte Polyether sind;
b) zu 10 bis 60 % (Gew.) einen oder mehrere silikatische Füllstoffe;
c) zu 0,3 bis 5,0 % (Gew.) ein oder mehrere epoxyfunktionalisierte Alkoxysilane
d) zu 0,3 bis 5,0 % (Gew.) ein oder mehrere aminofunktionalisierte Alkoxysilane
e) zu 0,3 bis 5,0 % (Gew.) ein oder mehrere aminofunktionalisierte Siloxane;
f) einen Radikalfänger, vorzugsweise zu 0,1 bis 0,5 % (Gew.);
g) einen Feuchtigkeitsfänger, vorzugsweise zu 0,5 bis 5 % (Gew.);
h) ein Antioxidans, vorzugsweise zu 0,1 bis 1 % (Gew.);
i) einen Rheologiemodifikator, vorzugsweise zu 0,2 bis 5,0 % (Gew.); und
j) einen Katalysator, vorzugsweise 0,05 bis 5 % (Gew.).

3. Hochfester und feuchtigkeitsbeständiger Klebstoff nach Anspruch 1 oder 2, wobei der eine oder die mehreren modifizierten Polyether eine dynamische Viskosität in dem Bereich von 250 bis 150.000 mPa.s, vorzugsweise 250 bis 50.000 mPa.s, aufweisen.

4. Hochfester und feuchtigkeitsbeständiger Klebstoff nach einem der Ansprüche 1 bis 3, wobei die silanmodifizierten Polyether α-silanmodifizierte Polyether sind.

5. Hochfester und feuchtigkeitsbeständiger Klebstoff nach einem der Ansprüche 1 bis 4, wobei der Klebstoff zu 45 bis 70 % (Gew.) eine oder mehrere silanmodifizierte Polyether, vorzugsweise zu 50 bis 65 % (Gew.), umfasst.

6. Hochfester und feuchtigkeitsbeständiger Klebstoff nach einem der Ansprüche 1 bis 5, wobei der Klebstoff zu 20 bis 55 % (Gew.) Füllmaterial, vorzugsweise zu 30 bis 50 % (Gew.), umfasst.

7. Hochfester und feuchtigkeitsbeständiger Klebstoff nach einem der Ansprüche 1 bis 6, wobei die Haftvermittler umfassen:
- ein epoxyfunktionalisiertes Alkoxysilan, das aus der Gruppe ausgewählt ist, bestehend aus 3-Glycidoxypropyltrimethoxysilan, 3-Glycidoxypropyltriethoxysilan, 3-Glycidoxypropylmethyldimethoxysilan, 3-Glycidoxypropylmethyldiethoxysilan, 2-(3,4-Epoxycyclohexyl)ethyltrimethoxysilan, 2-(3,4-Epoxycyclohexyl)ethyltriethoxysilan, 2-(3,4-Epoxycyclohexyl)ethylmethyldimethoxysilan, 2-(3,4-Epoxycyclohexyl)ethylmethyldiethoxysilan und Epoxysilanpolymer
- ein aminofunktionalisiertes Alkoxysilan oder Siloxane, das aus der Gruppe ausgewählt ist, bestehend aus 3-Aminopropyltriethoxysilan, N-2-(Aminoethyl)-3-aminopropyltrimethoxysilan, N-2-(Aminoethyl)-3-aminopropyltriethoxysilan, N-2-(Aminoethyl)-3-aminopropylmethyldimethoxysilan, 3-Aminopropylmethyldiethoxysilan, 3-Ureidopropyltrimethoxysilan, 3-Ureidopropyltriethoxysilan, Benzylaminosilan, N-Phenyl-gamma-aminopropyltrimethoxysilan, N-Phenylaminomethyltrimethoxysilan, N-Cyclohexylaminomethylmethyldiethoxysilan, N-Cyclohexylaminomethyltriethoxysilan, N-Ethyl-3-trimethoxysilyl-methylpropamin, N-Cyclohexyl-3-aminopropyltrimethoxysilan, 3-(2-Aminomethylamino)propyltriethoxysilan, (Cyclohexyl)methyldimethoxysilan, Dicyclopentyldimethoxysilan, Phenyltriethoxysilan, Phenyltriethoxysilan, oligomerem Diaminosilan/ aminofunktionellem Oligosiloxan, Cyclo[3-((2-aminoethyl)amino)propyl]methylsiloxan, Poly[3-(2-aminoethyl)aminopropyl]methylsiloxan, Polydimethylsiloxanverbindungen mit Aminoalkylgruppen, 3-aminofunktionellem Silan, multifunktionellem Aminosilan, aminofunktionellem Silan und Siloxanprimer, aminofunktionellem Siloxan, silanterminiertem Polyether + Additiv, N-(n-Butyl)-3-aminopropyltrimethoxysilan, Bis(3-trimethoxysilylpropyl)amin, Bis(3-triethoxysilylpropyl)amin, aminofunktionellem Silanoligomer, aminofunktionellem Oligosiloxan, N-2-(Aminoethyl)-3-aminopropylmethyldiethoxysilan, N-2-(Aminoethyl)-3-aminoisobutylmethyldimethoxysilan, 3-Aminopropylmethyldimethoxysilan, 3-(2-(2-Aminoethylamino)ethylamino)propyltrimethoxysilan, N-(n-Butyl)-3-aminopropyltriethoxysilan, Diaminosilangemisch, 3-Anilinopropyltrimethoxysilan, N,N-Diethylaminopropyltrimethoxysilan, N,N-Dimethylaminopropyltrimethoxysilan, Butylaminmethyltriethoxysilan, N-Cyclohexyl(aminomethyl)triethoxysilan, 2-Aminoethylaminomethyltriethoxysilan, Diethylaminomethyltriethoxysilan, Aminosilanhydrolysat und Aminosilanpolymer
- ein alkylfunktionalisiertes Alkoxysilan, das aus der Gruppe ausgewählt ist, bestehend aus Dodecyltrimethoxysilan, Octadecyltrimethoxysilan, n-Octyltriethoxysilan, Methyltrimethoxysilan, Methyltriethoxysilan, n-Propyltriethoxysilan, n-Propyltrimethoxysilan, n-Octyltrimethoxysilan, Dimethyldimethoxysilan, Dimethyldiethoxysilan, Hexadecyltrimethoxysilan, Trimethylethoxysilan, (Cyclohexyl)methyldimethoxysilan, Dicyclopentyldimethoxysilan; Dodecylmethyldiethoxysilan, n-Dodecyltriethoxysilan, Octadecyltriethoxysilan, n-Hexadecyltriethoxysilan, Tetraethoxysilan-28, Tetraethoxysilan-32, Tetraethoxysilan-40, 1,2-Bis(triethoxysilyl)ethan, 1,2-Bis(trimethoxysilyl)ethan, Methylpropyldiethoxysilan, Methylpropyldimethoxysilan, Isooctyltriethoxysilan, Octylmethyldimethoxysilan, Octylmethyldiethoxysilan, n-Octadecylmethyldimethoxysilan, n-Octadecylmethyldiethoxysilan.

8. Hochfester und feuchtigkeitsbeständiger Klebstoff nach einem der Ansprüche 1 bis 7, wobei der eine oder die mehreren Haftvermittler ferner umfassen:
- ein anhydridfunktionalisiertes Alkoxysilan, das vorzugsweise aus der Gruppe ausgewählt ist, bestehend aus 3-(Triethoxysilyl)propylbernsteinsäureanhydrid und thiocarboxylatfunktionellem Silan;
- ein chlorfunktionalisiertes Alkoxysilan, das vorzugsweise aus der Gruppe ausgewählt ist, bestehend aus 3-Chlorpropyltriethoxysilan, 3-Chlorpropyltrimethoxysilan, 3-Chlorpropylmethyldimethoxysilan, 3-Chlorpropylmethyldiethoxysilan; Trichlorsilan, Methylpropyldichlorsilan, 3-Chlorpropyltrichlorsilan, 3-Chlorpropyldichlormethylsilan, n-Propyltrichlorsilan, 3-Acetoxypropylmethyldichlorsilan, Vinyltrichlorsilan, n-Octyltrichlorsilan, Isooctyltrichlorsilan, Octyl(methyl)dichlorsilan, n-Dodecyltrichlorsilan, n-Dodecylmethyldichlorsilan, n-Hexadecyltrichlorsilan, n-Hexadecylmethyldichlorsilan, n-Octadecyltrichlorsilan, n-Octadecylmethyldichlorsilan, Chlormethyltrichlorsilan, Chlormethyltriethoxysilan, 3-Chlorpropyltriethoxysilan, 3-Chlorpropyltrimethoxysilan, 3-Chlorpropylmethyldimethoxysilan, 3-Chlorpropylmethyldiethoxysilan und 3-Chlorpropylmethyldipropoxysilan
- ein phenylfunktionalisiertes Alkoxysilan, das vorzugsweise aus der Gruppe ausgewählt ist, bestehend aus Phenyltrichlorsilan, Phenyltriethoxysilan, Phenyltrimethoxysilan, Dichlordiphenylsilan, Diphenyldimethoxysilan, Diphenyldiethoxysilan, Methylphenyldimethoxysilan und Methylphenyldiethoxysilan
- ein acryloxyfunktionalisiertes Alkoxysilan, das vorzugsweise aus der Gruppe ausgewählt ist, bestehend aus 3-Methacryloxypropyltrimethoxysilan, 3-Methacryloxypropylmethyldimethoxysilan, 3-Methacryloxypropylmethyldiethoxysilan, 3-Methacryloxypropyltriethoxysilan, (Methacryloxymethyl)-methyldimethoxysilan, Methacryloxymethyltrimethoxysilan, (Methacryloxymethyl)-methyldiethoxysilan, Methacryloxymethyltriethoxysilan, 3-Methacryloxypropyltriacetoxysilan, 3-Methacryloxypropyltriisopropoxysilan, 3-Acetoxypropyltrimethoxysilan, 3-Acryloxypropyltrimethoxysilan, (3-Acryloxypropyl)methyldimethoxysilan, Triacetoxyethylsilan, 1,2-Bis(triethoxysilyl)ethan, Methacrylsilanzubereitung, Methacrylsilanzubereitung, Alkoxysilanpolymer, n-Propyltriethyltrimethoxysilan, modifiziertem Acetoxysilan, 3-Mercaptopropyltrimethoxysilan, 1,2-Bis(trimethoxysilyl)ethan, Tetramethoxysilan, Tetraethoxysilan und Tetrapropoxysilan
- ein sulphatfunktionalisiertes Alkoxysilan, das vorzugsweise aus der Gruppe ausgewählt ist, bestehend aus Bis[3-(triethoxysilyl)propyl]tetrasulfid, 3-Mercaptopropyltrimethoxysilan, 3-Mercaptopropyltriethoxysilan, 3-Thiocyanatopropyltriethoxysilan und 3-(Isocyanatopropyl)trimethoxysilan, und
- ein trialkoxyfunktionalisiertes Silan, das vorzugsweise aus der Gruppe ausgewählt ist, bestehend aus Trimethoxysilan, 3-Isocyanatopropyltriethoxysilan, 3-Isocyanatopropyltrimethoxysilan, (Isocyanatomethyl)methyldimethoxysilan, N-Methyl[3-(trimethoxysilyl)-propyl]carbamat, N-Trimethoxysilylmethyl-O-methylcarbamat, N-Dimethoxy(methyl)silylmethyl-O-methyl-carbamat. Methyldimethoxysilan, Methyldiethoxysilan und Tris-[3-(trimethoxysilyl)propyl]-isocyanurat

9. Hochfester und feuchtigkeitsbeständiger Klebstoff nach einem der Ansprüche 1 bis 8, wobei der Klebstoff zu 0,3 bis 5,0 % (Gew.) ein oder mehrere epoxyfunktionalisierte Alkoxysilane, vorzugsweise zu 1,0 bis 4,0 % (Gew.), mehr bevorzugt zu 2,0 bis 3,0 % (Gew.), umfasst; und/oder wobei der Klebstoff zu 0,3 bis 5,0 % (Gew.) ein oder mehrere aminofunktionalisierte Alkoxysilane, vorzugsweise zu 1,0 bis 4,0 % (Gew.), mehr bevorzugt zu 2,0 bis 3,0 % (Gew.), umfasst; und/oder wobei der Klebstoff zu 0,3 bis 5,0 % (Gew.) ein oder mehrere aminofunktionalisierte Siloxane, vorzugsweise zu 1,0 bis 4,0 % (Gew.), mehr bevorzugt zu 2,0 bis 3,0 % (Gew.), umfasst.

10. Hochfester und feuchtigkeitsbeständiger Klebstoff nach einem der Ansprüche 1 bis 9, wobei der Radikalfänger aus der Gruppe der gehinderten Amin-Lichtstabilisatoren oder UV-Absorber wie Benzotriazol, Benzophenon, Oxanilid oder Hydroxyphenyltrianzin ausgewählt ist.

11. Hochfester und feuchtigkeitsbeständiger Klebstoff nach einem der Ansprüche 1 bis 10, wobei
- der Feuchtigkeitsfänger aus der Gruppe von vinylfunktionalisierten Alkoxysilanen, Vinyltriethoxysilan, Vinyltrimethoxysilan, Dichlormethylvinylsilan, Dimethoxymethylvinylsilan, Diethoxymethylvinylsilan, Vinyltriacetoxysilan, Chlordimethylvinylsilan, Vinyltrichlorsilan, Vinyltris(2-methoxyethoxy)silan, 1,3,5,7-Tetravinyl-1,3,5,7-tetramethylcyclotetrasiloxan, oligomeniertes Vinylsilan, Vinyltri(isopropoxy)silan, Vinylsilanpolymer, Vinylsilanzubereitung, Vinyltriacetoxysilan ausgewählt ist; und/oder
- das Antioxidans ein primäres Antioxidans oder ein sekundäres Antioxidans, gehindertes Phenyl-AO, Phosphit-AO oder Thioether-AO ist; und/oder
- der Rheologiemodifikator aus der Gruppe ausgewählt ist, bestehend aus einem Polyolefingemisch, Siliziumdioxid, Polyamidwachs und UF-PCC.

12. Hochfester und feuchtigkeitsbeständiger Klebstoff nach einem der Ansprüche 1 bis 11, wobei der Katalysator ein zweibasisches Amin, eine Zinnverbindung oder ein Titanatkatalysator ist.

13. Verwendung einer Kombination aus einem silanmodifizierten Polyether, vorzugsweise einem α-silanmodifizierten Polyether, einem Füllstoff aus Neuburger Kieselerde, einem epoxyfunktionalisierten Alkoxysilan, einem aminofunktionalisiertem Alkoxysilan und einem aminofunktionalisiertem Siloxan zum Bereitstellen eines hochfesten, feuchtigkeitsbeständigen und feuchtigkeitshärtenden Klebstoffs
wobei hohe Festigkeit definiert ist als:
1) eine Festigkeit von mehr als ≥10 N/mm² nach 7 Tagen in einem Normalklima aufweisend;
2) eine Festigkeit von mehr als ≥4 N/mm² nach 7 Tagen in einem Normalklima und 4 Tagen in Wasser bei 20 ± 5 °C aufweisend;
3) eine Festigkeit von mehr als ≥4 N/mm² nach 7 Tagen in einem Normalklima, 6 Stunden in kochendem Wasser und 2 Stunden in Wasser bei 20 ± 5 °C aufweisend;
wobei die aktuelle Festigkeit gemäß EN 204 bestimmt wird: Klassifizierung thermoplastischer Holzklebstoffe für nicht strukturelle Anwendungen und EN205: Holzklebstoffe für nicht-strukturelle Anwendungen oder Bestimmung der Zugscherfestigkeit von Überlappverbindungen.
4) eine Festigkeit von mehr als ≥5,5 N/mm² nach 7 Tagen in dem Normalklima, 1 Stunde in einem vorgeheizten Umluftofen bei 80 ± 2,0 °C für 60 ± 2 min aufweisend
wobei die aktuelle Festigkeit gemäß EN 14257 bestimmt wird: Bestimmung der Zugfestigkeit von Überlappverbindungen bei erhöhter Temperatur (WATT 91).

14. Verwendung nach Anspruch 13, wobei
- das epoxyfunktionalisierte Alkoxysilan 3-Glycidoxypropyltrimethoxysilan, 3-Glycidoxypropyltriethoxysilan, 3-Glycidoxypropylmethyldimethoxysilan, 3-Glycidoxypropylmethyldiethoxysilan, 2-(3,4-Epoxycyclohexyl)ethyltrimethoxysilan, 2-(3,4-Epoxycyclohexyl)ethyltnethoxysilan, 2-(3,4-Epoxycyclohexyl)ethylmethyldimethoxysilan, 2-(3,4-Epoxycyclohexyl)ethylmethyldiethoxysilan und Epoxysilanpolymer ist; und/oder
- das aminofunktionalisierte Alkoxysilan 3-Aminopropyltriethoxysilan, N-2-(Aminoethyl)-3-Aminopropyltrimethoxysilan, N-2-(Aminoethyl)-3-Aminopropyltriethoxysilan, N-2-(Aminoethyl)-3-Aminopropylmethyldimethoxysilan, 3-Aminopropylmethyldiethoxysilan, 3-Ureidopropyltrimethoxysilan, 3-Ureidopropyltriethoxysilan, Benzylaminosilan, N-Phenyl-gamma-Aminopropyltrimethoxysilan, N-Phenylaminomethyltrimethoxysilan, N-Cyclohexylaminomethylmethyldiethoxysilan, N-Cyclohexylaminomethyltriethoxysilan, N-Ethyl-3-Trimethoxysilylmethylpropamin, N-Cyclohexyl-3-Aminopropyltrimethoxysilan, 3-(2-Aminomethylamino)propyltriethoxysilan, (Cyclohexyl)methyldimethoxysilan, Dicyclopentyldimethoxysilan, Phenyltriethoxysilan, Phenyltriethoxysilan, oligomeres Diaminosilan/ aminofunktionelles Oligosiloxan, Cyclo[3-((2-aminoethyl)amino)propyl]methylsiloxan, Poly[3-(2-aminoethyl)aminopropyl]methylsiloxan, Polydimethylsiloxanverbindungen mit Aminoalkylgruppen, 3-aminofunktionelles Silan, multifunktionelles Aminosilan, aminofunktionelles Silan und Siloxanprimer, aminofunktionelles Siloxan, silanterminierter Polyether + Additiv, N-(n-Butyl)-3-aminopropyltrimethoxysilan, Bis(3-trimethoxysilylpropyl)amin, Bis(3-triethoxysilylpropyl)amin, aminofunktionelles Silanoligomer, aminofunktionelles Oligosiloxan ist; N-2-(Aminoethyl)-3-aminopropylmethyldiethoxysilan, N-2-(Aminoethyl)-3-aminoisobutylmethyldimethoxysilan, 3-Aminopropylmethyldimethoxysilan, 3-(2-(2-Aminoethylamino)ethylamino)propyltrimethoxysilan, N-(n-Butyl)-3-aminopropyltriethoxysilan, Diaminosilanmischung, 3-Anilinopropyltrimethoxysilan, N,N-Diethylaminopropyltrimethoxysilan, N,N-Dimethylaminopropyltrimethoxysilan, Butylaminmethyltriethoxysilan, N-Cyclohexyl(aminomethyl)triethoxysilan, 2-Aminoethylaminomethyltriethoxysilan, Diethylaminomethyltriethoxysilan, Aminosilanhydrolysat und Aminosilanpolymer.

## Revendications

1. Adhésif à haute résistance et résistant à l'humidité approprié pour être utilisé en tant qu'adhésif durcissant à l'humidité, ledit adhésif comprend :
a) 25 à 75 % (en poids) d'un ou plusieurs polyéthers modifiés, dans lequel le ou les polyéthers modifiés sont des polyéthers à modification silane ;
b) 10 à 60 % (en poids) d'un ou plusieurs matériaux de charge ;
c) 0,3 à 15 % (en poids) de promoteurs d'adhésion, lesdits promoteurs d'adhésion sont une combinaison d'un alcoxysilane à fonctionnalisation époxy, d'un alcoxysilane à fonctionnalisation amino et d'un siloxane à fonctionnalisation amino ;
dans lequel ledit adhésif comprend en outre un ou plusieurs composés choisis dans le groupe constitué par un agent anti-radicaux libres, un piégeur d'humidité, un antioxydant, un modificateur rhéologique, et un catalyseur ;
dans lequel ledit ou lesdits matériaux de charge sont de la terre siliceuse de Neuburg ; et
dans lequel haute résistance est définie comme :
1) ayant une résistance de plus de ≥10 N/mm² après 7 jours dans une atmosphère type ;
2) ayant une résistance de plus de ≥4 N/mm² après 7 jours dans une atmosphère type et 4 jours dans l'eau à 20 ± 5 °C ;
3) ayant une résistance de plus de ≥4 N/mm² après 7 jours dans une atmosphère type, 6 heures dans l'eau bouillante et 2 heures dans de l'eau à 20 ± 5 °C ;
dans lequel la présente résistance est déterminée conformément à EN 204 : Classification d'adhésifs thermoplastiques pour le bois destinés à des applications non structurelles et EN205 : Adhésifs pour bois pour applications non structurelles ou détermination de résistance au cisaillement en traction de joints de recouvrement.
4) ayant une résistance de plus de ≥5,5 N/mm² après 7 jours dans une atmosphère type, 1 heure dans un four ventilé préchauffé, à 80 ± 2,0 °C pendant 60 ± 2 min
dans lequel la présente résistance est déterminée conformément à EN 14257 : Détermination de la résistance en traction de joints à recouvrement à température élevée (WATT 91)

2. Adhésif à haute résistance et résistant à l'humidité selon la revendication 1 comprenant :
a) 25 à 75 % (en poids) d'un ou plusieurs polyéthers modifiés, dans lequel le ou les polyéthers modifiés sont des polyéthers à modification silane ;
b) 10 à 60 % (en poids) d'un ou plusieurs matériaux de charge siliceux ;
c) 0,3 à 5,0 % (en poids) d'un ou plusieurs alcoxysilanes à fonctionnalisation époxy
d) 0,3 à 5,0 % (en poids) d'un ou plusieurs alcoxysilanes à fonctionnalisation amino
e) 0,3 à 5,0 % (en poids) d'un ou plusieurs siloxanes à fonctionnalisation amino ;
f) un agent anti-radicaux libres, de préférence 0,1 à 0,5 % (en poids) ;
g) un piégeur d'humidité, de préférence 0,5 à 5 % (en poids) ;
h) un antioxydant, de préférence 0,1 à 1 % (en poids) ;
i) un modificateur rhéologique, de préférence 0,2 à 5,0 % (en poids) ; et
j) un catalyseur, de préférence 0,05 à 5 % (en poids).

3. Adhésif à haute résistance et résistant à l'humidité selon la revendication 1 ou la revendication 2 dans lequel ledit ou lesdits polyéthers modifiés ont une viscosité dynamique dans la plage de 250 à 150 000 mPa.s., de préférence 250 à 50 000 mPa.s.

4. Adhésif à haute résistance et résistant à l'humidité selon l'une quelconque des revendications 1 à 3, dans lequel lesdits polyéthers à modification silane sont des polyéthers à modification α-silane.

5. Adhésif à haute résistance et résistant à l'humidité selon l'une quelconque des revendications 1 à 4, dans lequel ledit adhésif comprend 45 à 70 % (en poids) d'un ou plusieurs polyéthers à modification silane, de préférence 50 à 65 % (en poids).

6. Adhésif à haute résistance et résistant à l'humidité selon l'une quelconque des revendications 1 à 5, dans lequel ledit adhésif comprend 20 à 55 % (en poids) de matériau de charge, de préférence, 30 à 50 % (en poids).

7. Adhésif à haute résistance et résistant à l'humidité selon l'une quelconque des revendications 1 à 6, dans lequel lesdits promoteurs d'adhésion comprennent :
- un alcoxysilane à fonctionnalisation époxy choisi dans le groupe constitué par 3-glycidoxypropyltriméthoxysilane, 3-glycidoxypropyltriéthoxysilane, 3-glycidoxypropyl-méthyldiméthoxysilane, 3-glycidoxypropyl-méthyldiéthoxysilane, 2-(3,4-époxycyclohexyl)éthyl-triméthoxysilane, 2-(3,4-époxycyclohexyl)éthyl-triéthoxysilane, 2-(3,4-époxycyclohexyl)éthyl-méthyldiméthoxysilane, 2-(3,4-époxycyclohexyl)éthyl-méthyldiéthoxysilane et polymère d'époxysilane
- un alcoxysilane ou des siloxanes à fonctionnalisation amino choisis dans le groupe constitué par 3-aminopropyltriéthoxysilane, N-2-(aminoéthyl)-3-aminopropyltriméthoxysilane, N-2-(aminoéthyl)-3-aminopropyltriéthoxysilane, N-2-(aminoéthyl)-3-aminopropylméthyldiméthoxysilane, 3-aminopropylméthyldiéthoxysilane, 3-uréidopropyltriméthoxysilane, 3-uréidopropyltriéthoxysilane, benzylamino-silane, N-phényl-gamma-aminopropyltriméthoxysilane, N-phénylaminométhyltriméthoxysilane, N-cyclohexylaminométhylméthyldiéthoxysilane, N-cyclohexylaminométhyltriéthoxysilane, N-éthyl-3-triméthoxysilyl-méthylpropamine, N-cyclohexyl-3-aminopropyltriméthoxysilane, 3-(2-aminométhylamino)propyltriéthoxysilane, (cyclohexyl)méthyldiméthoxysilane, dicyclopentyldiméthoxysilane, phényltriéthoxysilane, phényltriéthoxysilane, diamino silane oligomérique/ oligosiloxane aminofonctionnel, cyclo[3-((2 aminoéthyl)amino)propyl] méthylsiloxane, poly[3-(2-aminoéthyl)aminopropyl]méthyl siloxane, composés de polydiméthylsiloxane avec groupes aminoalkyle, silane à fonctionnalité 3-amino, aminosilane multifonctionnel, apprêt silane et siloxane à fonctionnalité amino, siloxane à fonctionnalité amino, polyéther à terminaison silane + additif, N-(n-butyl)-3-aminopropyltriméthoxysilane, bis(3-triméthoxysilylpropyl)amine, bis(3-triéthoxysilylpropyl)amine, oligomère de silane à fonctionnalité amino, oligosiloxane à fonctionnalité amino, N-2-(aminoéthyl)-3-aminopropylméthyldiéthoxysilane, N-2-(aminoéthyl)-3-amino-isobutylméthyldiméthoxysilane, 3-aminopropyl-méthyldiméthoxysilane, 3-(2-(2-aminoéthylamino)éthylamino)propyltriméthoxysilane, N-(n-butyl)-3-aminopropyltriéthoxysilane, mélange de diaminosilanes, 3-anilinopropyltriméthoxysilane, N,N-diéthylaminopropyltriméthoxysilane, N,N-diméthylaminopropyltriméthoxysilane, butylamineméthyltriéthoxysilane, N-cyclohexyl(aminométhyl)triéthoxysilane, 2-aminoéthylaminométhyltriéthoxysilane, diéthylaminométhyltriéthoxysilane, hydrolysat d'aminosilane et polymère d'aminosilane
- un alcoxysilane à fonctionnalisation alkyle choisi dans le groupe constitué par dodécyltriméthoxysilane, octadécyltriméthoxysilane, n-octyltriéthoxysilane, méthyltriméthoxysilane, méthyltriéthoxysilane, n-propyltriéthoxysilane, n-propyltriméthoxysilane, n-octyltriméthoxysilane, diméthyldiméthoxysilane, diméthyldiéthoxysilane, hexadécyltriméthoxysilane, triméthyléthoxysilane, (cyclohexyl)méthyldiméthoxysilane, dicyclopentyldiméthoxysilane ; dodécylméthyldiéthoxysilane, n-dodécyltriéthoxysilane, octadécyltriéthoxysilane, n-hexadécyltriéthoxysilane, tétraéthoxysilane-28, tétraéthoxysilane-32, tétraéthoxysilane-40, 1,2 bis(triéthoxysilyl)éthane, 1,2 bis(triméthoxysilyl)éthane, méthylpropyldiéthoxysilane, méthylpropyldiméthoxysilane, isoctyltriéthoxysilane, octylméthyldiméthoxysilane, octylméthyldiéthoxysilane, n-octadécylméthyldiméthoxysilane, n-octadécylméthyldiéthoxysilane.

8. Adhésif à haute résistance et résistant à l'humidité selon l'une quelconque des revendications 1 à 7, dans lequel ledit ou lesdits promoteurs d'adhésion comprennent en outre :
- un alcoxysilane à fonctionnalisation anhydride choisi de préférence dans le groupe constitué par 3-(triéthoxysilyl)propyl-succinicanhydride et silane à fonctionnalité thiocarboxylate ;
- un alcoxysilane à fonctionnalité chloro, choisi de préférence dans le groupe constitué par 3-chloropropyltriéthoxysilane, 3-chloropropyltriméthoxysilane, 3-chloropropylméthyldiméthoxysilane, 3-chloropropylméthyldiméthoxysilane ; trichlorosilane, méthylpropyldichlorosilane, 3-chloropropyltrichlorosilane, 3-chloropropyldichlorométhylsilane, n-propyltrichlorosilane, 3-acétoxypropylméthyldichlorosilane, vinyltrichlorosilane, n-octyltrichlorosilane, isooctyltrichlorosilane, octyl(méthyl)dichlorosilane, n-dodécyltrichlorosilane, n-dodécylméthyldichlorosilane, n- hexadécyltrichlorosilane, n-hexadécylméthyldichlorosilane, n-octadécyltrichlorosilane, n-octadécylméthyldichlorosilane, chlorométhyltrichlorosilane, chlorométhyltriéthoxysilane, 3-chloropropyltriéthoxysilane, 3-chloropropyltriméthoxysilane, 3-chloropropylméthyldiméthoxysilane, 3-chloropropylméthyldiéthoxysilane et 3-chloropropylméthyldipropoxysilane
- un alcoxysilane à fonctionnalité phényle choisi de préférence dans le groupe constitué par phényltrichlorosilane, phényltriéthoxysilane, phényltriméthoxysilane, dichlorodiphénylsilane, diphényldiméthoxysilane, diphényldiéthoxysilane, méthylphényldiméthoxysilane et méthylphényldiéthoxysilane
- un alcoxysilane à fonctionnalité acryloxy choisi de préférence dans le groupe constitué par 3-méthacryloxypropyltriméthoxysilane, 3-méthacryloxypropylméthyldiméthoxysilane, 3-méthacryloxypropylméthyldiéthoxysilane, 3-méthacryloxypropyltriéthoxysilane, (méthacryloxyméthyl)-méthyldiméthoxysilane, méthacryloxyméthyltriméthoxysilane, (méthacryloxyméthyl)-méthyldiéthoxysilane, méthacryloxyméthyltriéthoxy silane, 3-méthacryloxypropyltriacétoxysilane, 3-méthacryloxypropyltriisopropoxysilane, 3-acétoxypropyltriméthoxysilane, 3-acryloxypropyltriméthoxysilane, (3-acryloxypropyl)méthyldiméthoxysilane, triacétoxyéthylsilane, 1,2-bis(triéthoxysilyl)éthane, préparation de méthacrylicsilane, préparation de méthacrylicsilane, polymère d'alcoxyl-silane, n-propyltriecétoxysilane, acétoxysilane modifié, 3-mercaptopropyltriméthoxysilane, 1,2-bis(triméthoxysilyl)éthane, tétraméthoxysilane, tétraéthoxysilane, et tétrapropoxysilane
- un alcoxysilane à fonctionnalité sulfo, choisi de préférence dans le groupe constitué par bis[3-(triéthoxysilyl)propyl]tétrasulfure, 3-mercaptopropyltriméthoxysilane, 3-mercaptopropyltriéthoxysilane, 3-thiocyanatopropyltriéthoxysilane et 3-(isocyanatopropyl)-triméthoxysilane ; et
- un silane à fonctionnalité trialcoxy choisi de préférence dans le groupe constitué par triméthoxysilane, 3-isocyanatopropyltriéthoxysilane, 3-isocyanatopropyltriméthoxysilane, (isocyanatométhyl)méthyldiméthoxysilane, N-méthyl[3-(triméthoxysilyl)-propyl]carbamate, N-triméthoxysilylméthyl-O-méthylcarbamate, N-diméthoxy(méthyl)silylméthyl-O-méthyl-carbamate, méthyldiméthoxysilane, méthyldiéthoxysilane et isocyanurate de tris-[3-(triméthoxysilyl)propyle]

9. Adhésif à haute résistance et résistant à l'humidité selon l'une quelconque des revendications 1 à 8, dans lequel ledit adhésif comprend 0,3 à 5,0 % (en poids) d'un ou plusieurs alcoxysilanes à fonctionnalisation époxy, de préférence 1,0 à 4,0 % (en poids), plus préférablement 2,0 à 3,0 % (en poids) ; et/ou dans lequel ledit adhésif comprend 0,3 à 5,0 % (en poids) d'un ou plusieurs alcoxysilanes à fonctionnalisation amino, de préférence 1,0 à 4,0 % (en poids), plus préférablement 2,0 à 3,0 % (en poids) ; et/ou dans lequel ledit adhésif comprend 0,3 à 5,0 % (en poids) d'un ou plusieurs siloxanes à fonctionnalisation amino, de préférence 1,0 à 4,0 % (en poids), plus préférablement 2,0 à 3,0 % (en poids).

10. Adhésif à haute résistance et résistant à l'humidité selon l'une quelconque des revendications 1 à 9, dans lequel ledit agent anti-radicaux libres est choisi dans le groupe stabilisants à la lumière à base d'amines encombrées ou absorbeurs d'UV tels que benzotriazole, benzophénone, oxanilide ou hydroxyphényltrianzine.

11. Adhésif à haute résistance et résistant à l'humidité selon l'une quelconque des revendications 1 à 10, dans lequel
- ledit piégeur d'humidité est choisi dans le groupe alcoxysilanes à fonctionnalité vinylique, vinyltriéthoxysilane, vinyltriméthoxysilane, dichlorométhylvinylsilane, diméthoxyméthylvinylsilane, diéthoxyméthylvinylsilane, vinyltriacétoxysilane, chlorodiméthylvinylsilane, vinyltrichlorosilane, vinyltris(2-méthoxyéthoxy)silane, 1,3,5,7-tétravinyl-1,3,5,7-tétraméthylcyclotétrasiloxane, vinylsilane oligomérique, vinyltri(isopropoxy)silane, polymère de vinylsilane, préparation de vinylsilane, vinyltriacétoxysilane ; et/ou
- ledit antioxydant est un antioxydant primaire ou un antioxydant secondaire, phényle AO encombré, phosphite AO ou thioéther AO ; et/ou
- ledit modificateur rhéologique est choisi dans le groupe constitué par un mélange polyoléfinique, de la silice, de la cire de polyamide et UF-PCC.

12. Adhésif à haute résistance et résistant à l'humidité selon l'une quelconque des revendications 1 à 11, dans lequel ledit catalyseur est une amine dibasique, un composé d'étain ou un catalyseur titanate.

13. Utilisation d'une combinaison d'un polyéther à modification silane, de préférence un polyéther à modification α-silane, d'un matériau de charge de type terre siliceuse de Neuburg, d'un alcoxysilane à fonctionnalisation époxy, d'un alcoxysilane à fonctionnalisation amino et d'un siloxane à fonctionnalisation amino pour fournir a un adhésif à haute résistance, résistant à l'humidité et durcissant à l'humidité
dans laquelle haute résistance est définie comme :
1) ayant une résistance de plus de ≥10 N/mm² après 7 jours dans une atmosphère type ;
2) ayant une résistance de plus de ≥4 N/mm² après 7 jours dans une atmosphère type et 4 jours dans l'eau à 20 ± 5 °C ;
3) ayant une résistance de plus de ≥4 N/mm² après 7 jours dans une atmosphère type, 6 heures dans l'eau bouillante et 2 heures dans de l'eau à 20 ± 5 °C ;
dans laquelle la présente résistance est déterminée conformément à EN 204 : Classification d'adhésifs thermoplastiques pour le bois destinés à des applications non structurelles et EN205 : Adhésifs pour bois pour applications non structurelles ou détermination de résistance au cisaillement en traction de joints de recouvrement.
4) ayant une résistance de plus de ≥5,5 N/mm² après 7 jours dans une atmosphère type, 1 heure dans un four ventilé préchauffé, à 80 ± 2,0 °C pendant 60 ± 2 min
dans laquelle la présente résistance est déterminée conformément à EN 14257 : Détermination de la résistance en traction de joints de recouvrement à température élevée (WATT 91).

14. Utilisation selon la revendication 13, dans laquelle
- ledit alcoxysilane à fonctionnalisation époxy est 3-glycidoxypropyltriméthoxysilane, 3-glycidoxypropyltriéthoxysilane, 3-glycidoxypropyl-méthyldiméthoxysilane, 3-glycidoxypropyl-méthyldiéthoxysilane, 2-(3,4-époxycyclohexyl)éthyl-triméthoxysilane, 2-(3,4-époxycyclohexyl)éthyl-triéthoxysilane, 2-(3,4-époxycyclohexyl)éthyl-méthyldiméthoxysilane, 2-(3,4-époxycyclohexyl)éthyl-méthyldiéthoxysilane et polymère d'époxysilane ; et/ou
- ledit alcoxysilane à fonctionnalisation amino est 3-aminopropyltriéthoxysilane, N-2-(aminoéthyl)-3-aminopropyltriméthoxysilane, N-2-(aminoéthyl)-3-aminopropyltriéthoxysilane, N-2-(aminoéthyl)-3-aminopropylméthyldiméthoxysilane, 3-aminopropylméthyldiéthoxysilane, 3-uréidopropyltriméthoxysilane, 3-uréidopropyltriéthoxysilane, benzylamino-silane, N-phényl-gamma-aminopropyltriméthoxysilane, N-phénylaminométhyltriméthoxysilane, N-cyclohexylaminométhylméthyldiéthoxysilane, N-cyclohexylaminométhyltriéthoxysilane, N-éthyl-3-triméthoxysilyl-méthylpropamine, N-cyclohexyl-3-aminopropyltriméthoxysilane, 3-(2-aminométhylamino)propyltriéthoxysilane, (cyclohexyl)méthyldiméthoxysilane, dicyclopentyldiméthoxysilane, phényltriéthoxysilane, phényltriéthoxysilane, diamino silane oligomérique/oligosiloxane aminofonctionnel, cyclo[3-((2 aminoéthyl)amino)propyl] méthylsiloxane, poly[3-(2-aminoéthyl)aminopropyl]méthylsiloxane, composés de polydiméthylsiloxane avec groupes aminoalkyle, silane à fonctionnalité 3-amino, aminosilane multifonctionnel, apprêt silane et siloxane à fonctionnalité amine, siloxane à fonctionnalité amino, polyéther à terminaison silane + additif, N-(n-butyl)-3-aminopropyltriméthoxysilane, bis (3-triméthoxysilylpropyl)amine, bis (3-triéthoxysilylpropyl)amine, oligomère de silane à fonctionnalité amino, oligosiloxane à fonctionnalité amino ; N-2-(aminoéthyl)-3-aminopropylméthyldiéthoxysilane, N-2-(aminoéthyl)-3-aminoiso-butylméthyldiméthoxysilane, 3-aminopropylméthyldiméthoxysilane, 3-(2-(2-aminoéthylamino)éthylamino)propyltriméthoxysilane, N-(n-butyl)-3-aminopropyltriéthoxysilane, mélange de diaminosilanes, 3-anilinopropyltriméthoxysilane, N,N- diéthylaminopropyltriméthoxysilane, N,N-diméthylaminopropyltriméthoxysilane, butylaminéméthyltriéthoxysilane, N-cyclohexyl(aminométhyl)triéthoxysilane, 2-aminoéthylaminométhyltriéthoxysilane, diéthylaminométhyltriéthoxysilane, hydrolysat d'aminosilane et polymère d'aminosilane.
